# EUROPEAN PATENT SPECIFICATION

(11) **EP 2 707 406 B1**
(45) Date of publication and mention of the grant of the patent: **01.11.2017**
(21) Application number: 12721152.2
(22) Date of filing: 09.05.2012
(51) Int. Cl.: C08G 18/08, C08G 18/40

(54) **SEEDING PROCESS FOR THE MANUFACTURE OF POLYMER MODIFIED POLYOLS**
BEKEIMUNGSVERFAHREN ZUR HERSTELLUNG VON POLYMERMODIFIZIERTEN POLYOLEN
PROCÉDÉ D'ENSEMENCEMENT POUR LA FABRICATION DE POLYOLS MODIFIÉS PAR POLYMÈRE

(30) Priority: 09.05.2011 US 201161483798 P
(43) Date of publication of application: 19.03.2014
(73) Proprietor: Dow Global Technologies LLC, Midland, MI 48674 (US)
(72) Inventor: CASATI, Francois M., CH-8808 Pfaffikon (CH); COOKSON, Paul, CH-8833 Samstagern (CH); VAN DER WAL, Hanno R., NL-4542 BP Hoek (NL)
(74) Representative: Beck Greener
(86) International application number: PCT/US2012/037077
(87) International publication number: WO 2012/154820

(56) References cited:
- EP-A2- 0 129 977
- EP-A2- 0 418 039
- WO-A1-94/20558
- WO-A1-2006/040251

## Description

Embodiments of the invention relate to polyols, more specifically to polymer polyols.

Polyurethane foams are produced by the reaction of polyisocyanates and polyols in the presence of a blowing agent. In order to improve load-bearing and other foam properties, so-called polymer polyol products have been developed. A common type of polymer polyol is a dispersion of vinyl polymer particles in a polyol. Examples of vinyl polymer particle polyols include so-called "SAN" polyols, which are dispersions of styrene-acrylonitrile. Other common types of polymer polyols are so-called "PHD" polyols (dispersions of polyurea particles) and so-called "PIPA" (polyisocyanate polyaddition) polyols (dispersions of polyurethane and/or polyurethane-urea particles). PIPA and PHD particles may be produced by introducing the appropriate co-reactant or co-reactants into a polyol or polyol blend and reacting the co-reactant(s) with a polyisocyanate in order to polymerize the co-reactant(s). However, the resulting polymer polyols may have high viscosity at high particle concentrations.

Therefore, there is a need for a seeding additive to help producing high solids polymer polyols having low viscosities and good storage stability.

EP0418039 discloses a polyurethane or polyuria dispersion by reacting coreactants with a polyisocyanate in the presence of a polyurethane or polyurea dispersion.

WO94/2055 discloses a process of polymerizing an olamine with a polyisocyanate in the presence of a polyol and a stabilizer.

Embodiments of the invention provide for seeding additives to help produce high solids polymer polyols having low viscosities. The seeding additive may be a solid at room temperature and does not participate in the chemical reaction, i.e. are not reactive with isocyanates, in order to not to interfere with the polymer polyol formation, but acts only as a physical seeding for the formation of the particles in-situ in the carrier polyol.

In an embodiment, a method of producing a polymer polyol is provided. The method includes providing at least one first composition which includes at least one polyol, at least one isocyanate non-reactive seed population, and at least one of a co-reactant having an equivalent weight of up to 400 and at least one active hydrogen attached to a nitrogen or oxygen atom. The at least one isocyanate non-reactive seed population includes less than about 5% by weight of the total weight of the first composition, and the seed population has a maximum particle diameter of less than 10 µm. The first composition is combined with at least one polyisocyanate under mixing to form at least one of a polyurea, polyurethane, and a polyurethane-urea particle population dispersed in the first composition, wherein at least 90% by weight of the particle population has a particle diameter of less than 100 µm.

In another embodiment, a polymer polyol is a reaction product of a reaction system, and the reaction system includes at least one first composition including at least one polyol, at least one isocyanate non-reactive seed population, and at least one of a co-reactant having an equivalent weight of up to 400 and at least one active hydrogen attached to a nitrogen or oxygen atom. The at least one isocyanate non-reactive seed population includes less than about 5% by weight of the total weight of the first composition. The reaction system further includes at least one polyisocyanate. The polymer polyol has a particle population where at least 90% by weight of the particle population has a maximum particle diameter of less than 100 µm.

### DESCRIPTION OF EMBODIMENTS OF THE INVENTION

Embodiments of the present invention provide for a polymer polyol blend which includes PIPA and/or PHD particles which have been formed in situ in the polyol blend in the presence of isocyanate non-reactive seed particles. The polymer polyol blend may have a solid content of between about 15% and about 40% of the weight of the polymer polyol blend. Such high solid content may be obtained while maintaining small particles. For example, in one embodiment, at least 90% by volume of the particles have particle diameters of less than 10 µm.

The polyol blend may include any kind of polyol that is known in the art and include those described herein and any other commercially available polyol. Mixtures of one or more polyols may also be used to produce the polymer polyols according to the present invention.

Representative polyols include polyether polyols, polyester polyols, polyhydroxy-terminated acetal resins, hydroxyl-terminated amines. Alternative polyols that may be used include polyalkylene carbonate-based polyols and polyphosphate-based polyols. Preferred are polyols prepared by adding an alkylene oxide, such as ethylene oxide, propylene oxide, butylene oxide or a combination thereof, to an initiator having from 2 to 8, preferably 2 to 6 active hydrogen atoms. Catalysis for this polymerization can be either anionic or cationic, with catalysts such as KOH, CsOH, boron trifluoride, or a double metal cyanide complex (DMC) catalyst such as zinc hexacyanocobaltate or quaternary phosphazenium compound.

Examples of suitable initiator molecules are water, organic dicarboxylic acids, such as succinic acid, adipic acid, phthalic acid and terephthalic acid; and polyhydric, in particular dihydric to octohydric alcohols or dialkylene glycols.

Exemplary polyol initiators include, for example, ethanediol, 1,2- and 1,3-propanediol, diethylene glycol, dipropylene glycol, 1,4-butanediol, 1,6-hexanediol, glycerol, pentaerythritol, sorbitol, sucrose, neopentylglycol; 1,2-propylene glycol; trimethylolpropane glycerol; 1,6-hexanediol; 2,5-hexanediol; 1,4-butanediol; 1,4-cyclohexane diol; ethylene glycol; diethylene glycol; triethylene glycol; 9(1)-hydroxymethyloctadecanol, 1,4-bishydroxymethylcyclohexane; 8,8-bis(hydroxymethyl)tricyclo[5,2,1,0^{2,6}]decene; Dimerol alcohol (36 carbon diol available from Henkel Corporation); castor oil; epoxidized seed oil; hydrogenated bisphenol; 9,9(10,10)-bishydroxymethyloctadecanol; 1,2,6-hexanetriol; and combination thereof.

The polyols may for example be poly(propylene oxide) homopolymers, random copolymers of propylene oxide and ethylene oxide in which the poly(ethylene oxide) content is, for example, from about 1 to about 30% by weight, ethylene oxide-capped poly(propylene oxide) polymers and ethylene oxide-capped random copolymers of propylene oxide and ethylene oxide. For slabstock foam applications, such polyethers preferably contain 2-5, especially 2-4, and preferably from 2-3, mainly secondary hydroxyl groups per molecule and have an equivalent weight per hydroxyl group of from about 400 to about 3000, especially from about 800 to about 1750. For high resiliency slabstock and molded foam applications, such polyethers preferably contain 2-6, especially 2-4, mainly primary hydroxyl groups per molecule and have an equivalent weight per hydroxyl group of from about 1000 to about 3000, especially from about 1200 to about 2000. When blends of polyols are used, the nominal average functionality (number of hydroxyl groups per molecule) will be preferably in the ranges specified above. For viscoelastic foams shorter chain polyols with hydroxyl numbers above 150 are also used. For the production of semi-rigid foams, it is preferred to use a trifunctional polyol with a hydroxyl number of 30 to 80.

The polyether polyols may contain low terminal unsaturation (for example, less that 0.02 meq/g or less than 0.01 meq/g), such as those made using so-called double metal cyanide (DMC) catalysts or may have an unsaturation higher than 0.02 meq/g, provided it is below 0.1 meq/g. Polyester polyols typically contain about 2 hydroxyl groups per molecule and have an equivalent weight per hydroxyl group of about 400-1500.

The polyol blend is seeded with a small amount of suspended isocyanate non-reactive particles, which do not exhibit a chemical reaction when combined with an isocyanate. Examples of isocyanate non-reactive particles include PVC, Polyethylene, Polypropylene or vinyl polymer particles and inorganic minerals such as fumed silica, aluminum trihydrate, titanium dioxide, calcium carbonate, or barium sulfate. Vinyl polymer particles include particles of acrylonitrile, polystyrene, methacrylonitrile, methyl methacrylate, and styrene-acrylonitrile. The polyol blend may include between about 0.02 weight% and about 5 weight% of the seed particles based on the total weight of polyol blend. All individual values and subranges between about 0.02 and about 5.0% are included herein and disclosed herein; for example, the solid content may be from a lower limit of 0.02, 0.05, 0.1, 0.15, 0.2, 0.25, 0.3, 0.35, 0.4, 0.45, 0.5, 0.6, 0.67, 0.7, 0.75, 0.8, 0.85, 0.9, 1, 1.5, 2, 2.5, 3, or 4 to an upper limit of 0.25, 0.3, 0.35, 0.4, 0.45, 0.5, 0.6, 0.67, 0.7, 0.75, 0.8, 0.85, 0.9, 0.95, 1.5, 2, 2.5, 3, 4, or 5% of the weight of the polyol blend.

To produce a dispersion of vinyl polymer particles, one or more ethylenically unsaturated monomers and at least one stabilizer, both as described more fully below, are dispersed in the polyol phase. In general, the polymerization is conducted by forming an agitated mixture of the monomer in the continuous phase, and subjecting the mixture to conditions sufficient to polymerize the monomer to form dispersed polymer particles. Conditions suitable for conducting such polymerizations are well known and described, for example, in WO 2006/065345 and WO 2008/005708.

Suitable ethylenically unsaturated monomers are those which are polymerizable at a temperature at which the continuous phase does not significantly degrade (such as at temperature of below 150 °C, especially below 130 °C), and which have low solubility in the polyol blend when polymerized. Examples of suitable monomers include aliphatic conjugated dienes such as butadiene; monovinylidene aromatics such as styrene, α-methyl styrene, vinyl naphthalene and other inertly substituted styrenes; α,β-ethylenically unsaturated carboxylic acids and esters such as acrylic acid, methacrylic acid, methyl acrylate, methyl methacrylate, 2-hydroxyethyl acrylate and 2-hydroxyethyl methacrylate; α,β-ethylenically unsaturated nitriles such as acrylonitrile; acrylamide; vinyl esters such as vinyl acetate; vinyl ethers; vinyl ketones; vinyl and vinylidene halides; and the like. Of these, the monovinyl aromatics and α,β-unsaturated nitriles are preferred. Styrene and acrylonitrile are preferred monomers. Mixtures of styrene and acrylonitrile (SAN) may be preferred, especially mixtures in which styrene constitutes from about 25 to 95%, especially from about 50 to 75%, of the weight of the monomer mixture.

One class of stabilizers for producing vinyl polymer particles includes macromers that are compatible with the polyol blend (i.e. form a single-phase mixture with the polyol blend at the relative proportions that are present) and which contain polymerizable ethylenic unsaturation. The macromers may include a polyether portion, which is typically a polymer of propylene oxide and/or ethylene oxide. The polymer is capped with a difunctional capping agent that has a hydroxyl-reactive group and ethylenic unsaturation. Examples of such capping agents include isocyanates, carboxylic acids, carboxylic acid halides, carboxylic acid anhydrides and epoxies having ethylenic unsaturation, and hydroxyl-reactive silanes such as vinyl trimethoxysilane. The macromer may have a number average molecular weight of about 2000-50,000, preferably about 8,000 to about 15,000. The macromer may contain an average of from about 1 to about 7 or more hydroxyl groups/molecule. A macromer of particular interest has a number average molecular weight of about 8,000 to 15,000 and an average of no more than 1.0 hydroxyl group/molecule. Another macromer of particular interest has a number average molecular weight of about 8,000 to 15,000 and an average of 3-7 hydroxyl groups/molecule.

Another suitable class of stabilizers includes polyethers having a molecular weight of about 5,000 to about 50,000, especially about 8,000 to about 15,000, which do not contain added ethylenically polymerizable unsaturation. These stabilizers are conveniently prepared by reacting a lower molecular weight polyether polyol with a coupling agent, such as a polyisocyanate, certain silanes having two or more hydroxyl-reactive groups (such as alkoxyl groups), polyepoxides, polycarboxylic acids or the corresponding acid halides and anhydrides, and the like.

The vinyl polymer particles may be prepared by combining the monomer(s), stabilizer and polyol blend with agitation to form a mixture, and subjecting the mixture to polymerization conditions. It is possible to add all components to the reaction vessel at the start of the reaction, and it is possible to add monomers and stabilizer to the reaction vessel continuously or in stages during the reaction. When a macromer-type stabilizer is used, a small amount of the monomers may be polymerized before beginning the main monomer feed. The stabilizer may be added in a rate roughly proportional to the rate of growth of the surface area of the dispersed particles.

The polymerization may be conducted in the presence of a free radical initiator. The amount of the free radical initiator is selected to provide a commercially reasonable reaction rate while controlling exotherms. A typical amount of free radical initiator is from about 0.1 to about 5, preferably about 0.2 to about 2 and more preferably from about 0.25 to about 1% by weight, based on monomers. The free radical initiator may be all added at the start of the reaction, or it may be added continuously or in stages during the reaction (particularly when the monomer is so added). Examples of suitable free radical initiators include peroxyesters, peroxides, persulfates, perborates, percarbonates, azo compounds and the like. Specific examples of suitable free radical initiators include hydrogen peroxide, t-butyl peroctoate, di(t-butyl) peroxide, lauroyl peroxide, cumene hydroperoxide, t-butyl hydroperoxide, 2,2'-azobis [2,4-dimethyl]pentanenitrile, 2-(t-butylazo)-2-methylbutane nitrile, 2-(t-butylazo)-2-4,dimethylpentanenitrile, azobis (isobutyronitrile), azobis(methylbutyronitrile) (AMBN), tert-amyl peroxy 2-ethyl hexanoate and mixtures of any two or more thereof.

The polymerization to form vinyl polymer particles may be conducted in the presence of a chain transfer agent, as the use of these materials in some cases improves the stability and filterability of the polymer polyol product. Suitable such chain transfer agents include mercaptans such as tertiary dodecyl mercaptan, α-toluenethiol, 1-tetradecanethiol, 2-octanethiol, 1-heptanethio, 1-octanethiol, 2-naphthalenethiol, 1-naphthalenethiol, 1-hexanethiol, ethanethiol, and 1-dodecanethiol. Other suitable chain transfer agents include benzyl sulfide, iodoform, iodine, and the like. Suitable amounts of chain transfer agent are from about 0.1 to about 5, especially from about 0.25 to about 2.5 and preferably from about 0.5 to about 1%, based on the weight of the monomers.

The inorganic minerals include for example fumed silica, aluminum trihydrate, titanium dioxide, calcium carbonate, or barium sulfate. Preferably the particle diameters of the inorganic minerals are below 1 µm. Fumed silica is a synthetic amorphous SiO₂ produced by burning SiCl₄ in an O₂-H₂ flame. Examples include AEROSIL available from Evonik Industries.

To produce a dispersion of polyurethane-urea particles (PIPA) or urea particles (PHD) in the seeded polyol blend, PIPA or PHD forming co-reactant is added in the polyol blend that already includes the isocyanate non-reactive seed particles, at a level below 5% of the polyol, preferably below 5%, more preferably between 0.01 and 2%. Co-reactants are materials having an equivalent weight of up to 400 and a plurality of active hydrogen atoms attached to oxygen or nitrogen atoms.

If a PHD polymer polyol is desired, the PHD forming co-reactants may include amines, such as ammonia, anilines and substituted anilines, and fatty amines. The PHD forming co-reactants may also include diamines, such as ethylenediamine, 1,6-hexamethylenediamine, alkonolamines, and hydrazine.

If a PIPA polymer polyol is desired, the PIPA forming co-reactants may include diols, such as glycol; and alkanolamines, such as monoethanolamine, diethanolamine, triethanolamine, triisopropanolamine, 2-(2-aminoethoxyethanol), hydroxyethylpiperazine, monoisopropanolamine, diisopropanolamine and mixtures thereof. Other alkanolamines which may be considered include N-methylethanolamine, phenylethanolamine, and glycol amine. It is also possible to provide a mixture of PHD and PIPA forming co-reactants to form hybrid PHD-PIPA particles.

The at least one PHD and/or PIPA polymer forming co-reactants are added to the blend in a concentration of between about 2 wt.% and about 40 wt.% of the total polyol blend weight, preferably between about 5 wt.% and about 30 wt.%. All individual values and subranges between about 5 wt.% and about 50 wt.% are included herein and disclosed herein; for example, the solid content may be from a lower limit of 5, 8, 10, 15, 20, 25, or 30 wt.% to an upper limit of 20, 25, 30, 35, or 40 wt.% of the weight of the polymer polyol.

The composition of the PIPA and/or PHD particles may not only depend on the structure of the co-reactant; the composition of the polyol blend may also affect the particle compositions. Polyols such as glycerol, and amines with only alcohols, such as triethanolamine, incorporate polyurethane into the particles; amino alcohols, such as triethanolamine, incorporate polyurethane-urea into the particles; primary or secondary amines, such as hydrazine or Ethylenediamine, incorporate polyurea into the particles. Another co-reactant can be water which forms additionally polybiuret's and polyallophanate's. Typically, the isocyanate reactive particles are obtained by under-indexing, i.e. by using an amount of polyisocyanate lower than the theoretical one needed to fully react the co-reactant. Additionally the polymer itself can contain reactive groups, such as for instance polyureas, although these are not as reactive as hydroxyls or secondary amine moieties. In addition to the reaction of co-reactant with polyisocyanate, it is recognized that the carrier polyols does react to some extent with the isocyanate, hence all of these isocyanate reactive seeds contain polyurethane polymer moieties.

Additionally, catalysts may be combined with the polyol blend. Catalytic quantities of organometallics may be used. Organometallic compounds useful as catalysts include those of bismuth, lead, tin, titanium, iron, antimony, uranium, cadmium, cobalt, thorium, aluminum, mercury, zinc, nickel, cerium, molybdenum, vanadium, copper, manganese, zirconium, chromium, etc. Some examples of these metal catalysts include bismuth nitrate, bismuth neodecanoate, lead 2-ethylhexoate, lead benzoate, lead oleate, dibutyltin dilaurate, tributyltin, butyltin trichloride, dimethyltin, dimethyltin dineodecanoate, stannic chloride, stannous octoate, stannous oleate, stannous riconoleate, dibutyltin di(2-ethylhexoate), zinc octoate, zinc riconoleate ferric chloride, antimony trichloride, antimony glycolate, tin glycolates, iron acetyl acetonate etc. The catalyst may accelerate the reaction of diisocyanate with the primary hydroxyl groups of the alkanolamines.

Under mixing, at least one polyisocyanate is added to the polyol blend. Mixing may be produced by high or low pressure injection, in stirred reactors or by using static mixers in series, as is know in the art. Polyisocyanates which may be used in the present invention include aliphatic, cycloaliphatic, arylaliphatic and aromatic isocyanates.

Examples of suitable aromatic polyisocyanates include the 4,4'-, 2,4' and 2,2'-isomers of diphenylmethane diisocyante (MDI), blends thereof and polymeric and monomeric MDI blends, toluene-2,4- and 2,6-diisocyanates (TDI), m- and p-phenylenediisocyanate, chlorophenylene-2,4-diisocyanate, diphenylene-4,4'-diisocyanate, 4,4'-diisocyanate-3,3'-dimehtyldiphenyl, 3-methyldiphenyl-methane-4,4'-diisocyanate and diphenyletherdiisocyanate and 2,4,6-triisocyanatotoluene and 2,4,4'-triisocyanatodiphenylether.

Mixtures of polyisocyanates may be used, such as the commercially available mixtures of 2,4- and 2,6-isomers of toluene diisocyanates. A crude polyisocyanate may also be used in the practice of this invention, such as crude toluene diisocyanate obtained by the phosgenation of a mixture of toluene diamine or the crude diphenylmethane diisocyanate obtained by the phosgenation of crude methylene diphenylamine. TDI/MDI blends may also be used.

Examples of aliphatic polyisocyanates include ethylene diisocyanate, 1,6-hexamethylene diisocyanate, isophorone diisocyanate, cyclohexane 1,4-diisocyanate, 4,4'-dicyclohexylmethane diisocyanate, saturated analogues of the above mentioned aromatic polyisocyanates and mixtures thereof.

The at least one polyisocyanate is added to the polyol blend for an isocyanate index of between about 30 and about 150, such as between about 50 and about 120, between about 60 and about 110, or between 60 and 90. The isocyanate index may be kept below 100 in order to minimize isocyanate reaction with polyol. The isocyanate index is the ratio of isocyanate-groups over isocyanate-reactive hydrogen atoms present in a formulation, given as a percentage. Thus, the isocyanate index expresses the percentage of isocyanate actually used in a formulation with respect to the amount of isocyanate theoretically required for reacting with the amount of isocyanate-reactive hydrogen used in a formulation.

The at least one PHD and/or PIPA polymer forming co-reactants and polyisocyanate may be successfully reacted without the application of external heat and atmospheric pressure, although higher temperatures and pressures may also be acceptable. For example, the reaction temperature could range between about 25 °C and about 100 °C., and the pressure may range from atmospheric to about 100 psi.

The vinyl polymer, PHD, and/or polymer polyols may have a vinyl polymer, PHD, and/or PIPA polymer solids content within the range between about 5 wt.% and about 40 wt.%, preferably, between about 10 wt.% and 30 wt.%, based on the total weight of the vinyl polymer, PHD, and/or PIPA. All individual values and subranges between about 5 wt.% and about 50 wt.% are included herein and disclosed herein; for example, the solid content may be from a lower limit of 5, 8, 10, 15, 20, 25, or 30 wt.% to an upper limit of 20, 25, 30, 35, or 40 wt.% of the weight of the The PHD and/or PIPA polymer solids may have average particle size diameters below about 10 µm as measured in accordance to ASTM D1921.

The viscosity of the resulting polymer polyol may be less than 20,000 cps, is preferably less than 12,000 cps, and preferably less than 10,000 cps, measured at 25°C in accordance to the ISO 3219 method..

The polymer polyol prepared from the above ingredients may then be incorporated into a formulation which results in a polyurethane product. The polymer polyols embodied herein may be used in conjunction with anpoly isocyanate such as those mentioned above or may be combined with additional polyols well known in the art, and reacted with an polyisocyanate to form a resulting polyurethane foam product.

In general, the polyurethane foams are prepared by mixing a polyisocyanate, such as the poly isocyanates listed above, or combinations thereof, and the polymer polyol in the presence of a blowing agent, catalyst(s) and other optional ingredients as desired. Additional polyols and/or polymer polyols may also be added to the polymer polyol blend before the polymer polyol composition is reacted with the polyisocyanate. The conditions for the reaction are such that the polyisocyanate and polyol composition react to form a polyurethane and/or polyurea polymer while the blowing agent generates a gas that expands the reacting mixture.

The blend may have a total solids content (including vinyl polymer, PIPA and/or PHD solids) of between about 5 wt.% and about 50 wt.% or more, based on the total mass of the blend. In one embodiment the content is between about 20 and 40 wt.%. All individual values and subranges between about 5 wt.% and about 50 wt.% are included herein and disclosed herein; for example, the solid content may be from a lower limit of 5, 8, 10, 15, 20, 25, or 30 wt.% to an upper limit of 20, 25, 30, 35, or 40 wt.% of the weight of the polyol blend. Additionally solid fillers, such as minerals, or flame retarding agents, such as melamine, or recycled polyurethane foam powder, can be incorporated in the foam formulation, at levels up to 50%, more preferably at levels below 20%.

The blend may also include one or more catalysts for the reaction of the polyol (and water, if present) with the polyisocyanate. Any suitable urethane catalyst may be used, including tertiary amine compounds, amines with isocyanate reactive groups and organometallic compounds. Exemplary tertiary amine compounds include triethylenediamine, N-methylmorpholine, N,N-dimethylcyclohexylamine, pentamethyldiethylenetriamine, tetramethylethylenediamine, bis (dimethylaminoethyl)ether, 1-methyl-4-dimethylaminoethyl-piperazine, 3-methoxy-N-dimethylpropylamine, N-ethylmorpholine, dimethylethanolamine, N-cocomorpholine, N,N-dimethyl-N',N'-dimethyl isopropylpropylenediamine, N,N-diethyl-3-diethylamino- propylamine and dimethylbenzylamine. Exemplary organometallic catalysts include organomercury, organolead, organoferric and organotin catalysts, with organotin catalysts being preferred among these. Suitable tin catalysts include stannous chloride, tin salts of carboxylic acids such as dibutyltin di-laurate. A catalyst for the trimerization of isocyanates, resulting in an isocyanurate, such as an alkali metal alkoxide may also optionally be employed herein. The amount of amine catalysts can vary from 0.02 to 5 percent in the formulation or organometallic catalysts from 0.001 to 1 percent in the formulation can be used.

Additionally, it may be desirable to employ certain other ingredients in preparing polyurethane polymers. Among these additional ingredients are emulsifiers, silicone surfactants, preservatives, flame retardants, colorants, antioxidants, reinforcing agents, UV stabilizers, etc.

The foam may be formed by the so-called prepolymer method, in which a stoichiometric excess of the polyisocyanate is first reacted with the high equivalent weight polyol(s) to form a prepolymer, which is in a second step reacted with a chain extender and/or water to form the desired foam. Frothing methods may also be suitable. So-called one-shot methods, may also be used. In such one-shot methods, the polyisocyanate and all isocyanate-reactive components are simultaneously brought together and caused to react. Three widely used one-shot methods which are suitable for use herein include slabstock foam processes, high resiliency slabstock foam processes, and molded foam methods.

Slabstock foam may be prepared by mixing the foam ingredients and dispensing them into a trough or other region where the reaction mixture reacts, rises freely against the atmosphere (sometimes under a film or other flexible covering) and cures. In common commercial scale slabstock foam production, the foam ingredients (or various mixtures thereof) are pumped independently to a mixing head where they are mixed and dispensed onto a conveyor that is lined with paper or plastic. Foaming and curing occurs on the conveyor to form a foam bun. The resulting foams are typically from about from about 10 kg/m³ to 80 kg/m³, especially from about 15 kg/m³ to 60 kg/m³, preferably from about 17 kg/m³ to 50 kg/m³ in density.

A slabstock foam formulation may contain from about 0.5 to about 8, preferably about 2 to about 5 parts by weight water per 100 parts by weight polyol at atmospheric pressure. At reduced pressure these levels are reduced.

High resilience slabstock (HR slabstock) foam may be made in methods similar to those used to make conventional slabstock foam but using higher equivalent weight polyols. HR slabstock foams are characterized in exhibiting a Ball rebound score of 45% or higher, per ASTM 3574.03. Water levels tend to be from about 1 to about 6, especially from about 2 to about 5 parts per 100 parts (high equivalent) by weight of polyols.

Molded foam can be made according to the invention by transferring the reactants (polyol composition including copolyester, polyisocyanate, blowing agent, and surfactant) to a closed mold, made of steel, aluminum or epoxy resin, where the foaming reaction takes place to produce a shaped foam. Either a so-called "cold-molding" process, in which the mold is not preheated significantly above ambient temperatures, or a "hot-molding" process, in which the mold is heated to drive the cure, can be used. Cold-molding processes are preferred to produce high resilience molded foam. Densities for molded foams generally range from 30 to 70 kg/m³.

### EXAMPLES

The following examples are provided to illustrate the embodiments of the invention, but are not intended to limit the scope thereof. All parts and percentages are by weight unless otherwise indicated.

The following materials were used:

| | |
|---|---|
| VORANOL* CP-4702 | A glycerine initiated polyoxypropylene polyol having a polyoxyethylene cap, a hydroxyl number in the range of 33-38, an average molecular weight of 4,700, and a viscosity at 25 °C of 820 cps. Available from The Dow Chemical Company. |
| VORANOL* 4735 | A glycerine initiated polyoxypropylene polyol having a polyoxyethylene cap, a hydroxyl number in the range of 33 to 38, average molecular weight of 4,700; and a viscosity at 25 °C of 820 cps, available from The Dow Chemical Company. |
| SPECFLEX * NC 700 | A grafted polyether polyol containing 40% copolymerized styrene and acrylonitrile (SAN). |
| VTMSP | A vinyltrimethoxy silane modified preformed stabilizer prepared according to Example 3 of EP-0 162 589 B1. |
| TRIGONOX 27 | A free radical polymerization initiator containing tert- butyl amyl peroxy diethylacetate sold by Akzo Chemie under the trademark TRIGONOX 121. |
| Styrene | Available from Aldrich |
| Acrylonitile | Available from Aldrich |
| PFS SAN seed | Made as described in Example lof WO 97/15605 using a preformed stabilizer (PFS), but with 56.8 parts VORANOL CP-4702, 35.0 parts VTMSP, 0.2 parts TRIGANOX 27, 5.6 parts styrene, and 2.4 parts acrylonitrile. After removal of the residual monomers by vacuum stripping, the polymer content of the PFS is from 5-7% solids by weight with a particle size of 0.2-0.3 µm and a viscosity of 3500-4500 cPs at 25 °C. |
| PIPA seed | A 10% solids PIPA polyol based on 90 parts of Voranol CP 4735 as the carrier polyol, 4.7 parts of triethanolamine reacted with 5.3 parts of VORANATE T-80 using 0.02 parts of METATIN 1230 as the catalyst. Seed A has a viscosity of 2,500 mPa.s at 25 °C and an |
| | OH number of 49.7 mg KOH/g. All PIPA particles are below 5 µms in size. |
| Fumed silica seed | Amorphous Silicic Anhydride (CAS# 112945-52-5) powder with particle size 0.014 µm, available from Aldrich |
| SAN seed | SPECFLEX* NC 700, a grafted polyether polyol containing 40% copolymerized styrene and acrylonitrile (SAN). Available from The Dow Chemical Company. |
| Triethanolamine | Available from Aldrich |
| Dibutyltin dilaurate | Available from Air Products & Chemicals Inc under the trademark Dabco T-12 |
| KOSMOS 54 | A zinc ricinoleate catalyst available from Evonik Industries. |
| VORANATE* T-80 | A toluene diisocyanate (80% 2,4-toluene diisocyanate and 20% 2,6-toluene diisocyanate by weight) composition available from The Dow Chemical Company. |
| METATIN 1230 | A dimethyltin catalyst available from Acima Specialty Chemicals. |

| | |
|---|---|
| *SPECFLEX, VORANATE, and VORANOL are trademarks of The Dow Chemical Company. | |

Polyol viscosities are measured using a cone and plate viscometer at 20 °C.

### Example 1 and Comparative Examples 1 and 2

PIPA polyol formulations are based on a combined total mass of 500 g. VORANOL CP-4702, triethanolamine and seed polyol (Example 1 and Comparative Example 1) are pre-weighed into a 900 ml polypropylene beaker and mixed for 60 seconds at 1500 rpm. VORANATE T-80 is added and mixed for 20 seconds. Finally, dibutyltin dilaurate is added and mixed for a further 100 seconds. The PIPA polyols are then allowed to mature and the viscosities measured after 72 hours at 20 °C. As seen in Table 1, it is possible to use a non-reactive seed (Example 1, PFS SAN seed) and still obtain similar viscosity reduction as when using reactive seed (Comparative Example 2, PIPA seed) compared to a PIPA polyol produced without seed.

**Table 1**

| | Comparative Example 1 | Comparative Example 2 | Example 1 |
|---|---|---|---|
| | No seed | PIPA seed | PFS SAN seed |
| VORANOL CP-4702 | 80.0 | 78.4 | 78.4 |
| PIPA seed | | 1.60 | |
| PFS SAN seed | | | 1.60 |
| Triethanolamine | 9.38 | 9.38 | 9.38 |
| Dibutyltin dilaurate | 0.02 | 0.02 | 0.02 |
| VORANATE T-80 | 10.62 | 10.62 | 10.62 |
| Index | 97 | 97 | 97 |
| Solids % | 20 | 20 | 20 |
| Viscosity / mPa.s | 15000 | 9550 | 9600 |
| Average particle size / µm | 8.2 | 3.6 | 6.8 |

### Example 2 and Comparative Example 3

PIPA polyol formulations are based on a combined total mass of 500 g. VORANOL CP-4702, triethanolamine and seed polyol (Example 2) are pre-weighed into a 900 ml polypropylene beaker and mixed for 60 seconds at 1500 rpm. VORANATE T-80 is added and mixed for 20 seconds. Finally, METATIN 1230 is added and mixed for a further 100 seconds. The PIPA polyols are then allowed to mature and the viscosities measured after 24 hours at 20 °C.

**Table 2**

| | Comparative Example 3 | Example 2 |
|---|---|---|
| | No seed | Fumed silica seed |
| VORANOL CP-4702 | 80 | 80 |
| Triethanolamine | 9.38 | 9.38 |
| METATIN Katalysator 1230 | 0.01 | 0.01 |
| VORANATE T-80 | 10.64 | 10.64 |
| Fumed Silica Seed | | 0.05 |
| Viscosity / mPa.s | 19,564 | 15,353 |

### Example 3 and Comparative Examples 4 and 5

PIPA polyol formulations are made using a continuous process in a POLYMECH high pressure mixing-head designed to produce polyurethane foam. The following streams are used: VORANOL 4735; triethanolamine , METATIN 1230 ; blend of polyols containing the SAN or PIPA seed and 2 parts VORANOL CP 4735 (for Example 3 and Comparative Example 4, respectively); and VORANATE T-80. Total outputs are 20.2 kg/min for comparative example 3; 20.7 kg/minute for comparative example 4 and 19.5 kg/min for example 3. Table 3 gives the parts by weight used of each component. All particles of Example 3 have particle diameters below 100 µm. The use of SAN seed reduces the PIPA polyol viscosity.

**Table 3**

| | Comparative Example 3 | Comparative Example 4 | Example 3 |
|---|---|---|---|
| | No seed | PIPA seed | SAN seed |
| VORANOL 4735 | 78 | 76 | 78 |
| PIPA seed | | 1.98 | |
| SAN seed | | | 0.35 |
| Triethanolamine | 9.38 | 9.38 | 9.38 |
| METATIN 1230 (10 wt% in Voranol 4735) | 2 | 2 | 2 |
| VORANATE T-80 | 10.64 | 10.64 | 10.64 |
| Index | 97 | 97 | 97 |
| % solids | 20 | 20 | 20 |
| Viscosity / mPa.s | 8,010 | 6,940 | 7,430 |
| OH number | 67.5 | 62.5 | 68.2 |

### Examples 4, 5 and 6

Bench PIPA's according to procedure of example 2 but using a different catalyst. All seeded PIPA polyols have low viscosity at 20 °C.

**Table 4**

| | Example 4 | Example 5 | Example 6 |
|---|---|---|---|
| VORANOL CP 4702 | 79.4 | 78.2 | 78.2 |
| Triethanolamine | 9.38 | 9.38 | 9.38 |
| SPECFLEX NC 700 | 0.4 | | |
| VTMSP | | 1.6 | |
| PFS SAN seed | | | 1.6 |
| KOSMOS 54 | 0.2 | 0.2 | 0.2 |
| VORANATE T-80 | 10.62 | 10.62 | 10.62 |
| Viscosity / mPa.s | 3,933 | 4,105 | 4,300 |

While the foregoing is directed to embodiments of the present invention other and further embodiments of the invention may be devised without departing from the basic scope thereof and the scope thereof is determined by the claims that follow.

## Claims

1. A method of producing a polymer polyol, the method comprising:
providing at least one first composition comprising at least one polyol, at least one isocyanate non-reactive seed population, and at least one co-reactant, wherein the at least one isocyanate non-reactive seed population comprises less than 5% by weight of the total weight of the first composition, the seed population has a maximum particle diameter of less than 10 µm, and the co-reactant has an equivalent weight of up to 400 and at least one active hydrogen attached to a nitrogen or oxygen atom; and
combining the first composition with at least one polyisocyanate under mixing to form at least one of a polyurea, polyurethane, and a polyurethane-urea particle population dispersed in the first composition, wherein at least 90% by weight of the particle population has a particle diameter of less than 100 µm.

2. A polymer polyol comprising a reaction product of a reaction system, the reaction system comprising:
at least one first composition comprising at least one polyol, at least one isocyanate non-reactive seed population, and at least one co-reactant, wherein the at least one isocyanate non-reactive seed population comprises less than 5% by weight of the total weight of the first composition, the seed population has a maximum particle diameter of less than 10 µm, and the co-reactant has an equivalent weight of up to 400 and at least one active hydrogen attached to a nitrogen or oxygen atom; and
at least one polyisocyanate, wherein the polymer polyol has a particle population wherein at least 90% by weight of the particle population has a maximum particle diameter of less than 100 µm.

3. The method of claim 1 or the polymer polyol of claim 2, wherein the at least one isocyanate non-reactive seed population comprises particles of at least one of acrylonitrile, polystyrene, methacrylonitrile, methyl methacrylate, styrene-acrylonitrile, calcium carbonate, or barium sulfate, aluminum trihydrate, titanium dioxide, and fumed silica.

4. The method of claim 1 or the polymer polyol of claim 2, wherein the at least one isocyanate non-reactive seed population comprises particles of styrene-acrylonitrile made using at least one preformed stabilizer.

5. The method or the polymer polyol of any one of claims 1-4, wherein the polymer polyol composition has a solid content of between 15 and 40% of the weight of the polymer polyol.

6. The method or the polymer polyol of any one of claims 1-5, wherein at least 90% by weight of the particle population have a maximum diameter of less than 10 µm.

7. The method or the polymer polyol of any one of claims 1-5, wherein at least 90% by weight of the particle population have a maximum diameter of less than 5 µm.

8. The method or the polymer polyol of any one of claims 1-7, wherein the seed population has a maximum particle diameter of less than 5 µm.

9. The method or the polymer polyol of any one of claims 1-8, wherein the co-reactant comprises at least one of a primary or secondary amine or an alkanolamine.

10. A polyurethane foam comprising the reaction product of a reaction mixture, the reaction mixture comprising:
the polymer polyol of any one of claims 1-9; and
at least one polyisocyanate.

## Patentansprüche

1. Ein Verfahren zum Herstellen eines Polymerpolyols, wobei das Verfahren Folgendes beinhaltet:
Bereitstellen von mindestens einer ersten Zusammensetzung, beinhaltend mindestens ein Polyol, mindestens eine mit Isocyanat nicht reaktive Impfpopulation und mindestens einen Co-Reaktanten, wobei die mindestens eine mit Isocyanat nicht reaktive Impfpopulation weniger als 5 Gew.-% des Gesamtgewichts der ersten Zusammensetzung beinhaltet, die Impfpopulation einen maximalen Partikeldurchmesser von weniger als 10 µm aufweist und der Co-Reaktant ein Äquivalenzgewicht von bis zu 400 und mindestens einen an ein Stickstoff- oder Sauerstoffatom gebundenen aktiven Wasserstoff aufweist; und
unter Rühren Kombinieren der ersten Zusammensetzung mit mindestens einem Polyisocyanat, um mindestens eines von einer Polyharnstoff-, Polyurethan- und einer Polyurethan-Harnstoff-Partikelpopulation zu bilden, die in der ersten Zusammensetzung dispergiert ist, wobei mindestens 90 Gew.-% der Partikelpopulation einen Partikeldurchmesser von weniger als 100 µm aufweisen.

2. Ein Polymerpolyol, beinhaltend ein Reaktionsprodukt eines Reaktionssystems, wobei das Reaktionssystem Folgendes beinhaltet:
mindestens eine erste Zusammensetzung, beinhaltend mindestens ein Polyol, mindestens eine mit Isocyanat nicht reaktive Impfpopulation und mindestens einen Co-Reaktanten, wobei die mindestens eine mit Isocyanat nicht reaktive Impfpopulation weniger als 5 Gew.-% des Gesamtgewichts der ersten Zusammensetzung beinhaltet, die Impfpopulation einen maximalen Partikeldurchmesser von weniger als 10 µm aufweist und der Co-Reaktant ein Äquivalenzgewicht von bis zu 400 und mindestens einen an ein Stickstoff- oder Sauerstoffatom gebundenen aktiven Wasserstoff aufweist; und
mindestens ein Polyisocyanat, wobei das Polymerpolyol eine Partikelpopulation aufweist, wobei mindestens 90 Gew.-% der Partikelpopulation einen maximalen Partikeldurchmesser von weniger als 100 µm aufweisen.

3. Verfahren gemäß Anspruch 1 oder Polymerpolyol gemäß Anspruch 2, wobei die mindestens eine mit Isocyanat nicht reaktive Impfpopulation Partikel von mindestens einem von Acrylnitril, Polystyrol, Methacrylnitril, Methylmethacrylat, Styrol-Acrylnitril, Calciumcarbonat oder Bariumsulfat, Aluminiumtrihydrat, Titandioxid und pyrogener Kieselsäure beinhaltet.

4. Verfahren gemäß Anspruch 1 oder Polymerpolyol gemäß Anspruch 2, wobei die mindestens eine mit Isocyanat nicht reaktive Impfpopulation Partikel von Styrol-Acrylnitril beinhaltet, die unter Verwendung von mindestens einem vorgefertigten Stabilisator hergestellt wurden.

5. Verfahren oder Polymerpolyol gemäß einem der Ansprüche 1-4, wobei die Polymerpolyolzusammensetzung einen Feststoffgehalt von zwischen 15 und 40 % des Gewichts des Polymerpolyols aufweist.

6. Verfahren oder Polymerpolyol gemäß einem der Ansprüche 1-5, wobei mindestens 90 Gew.-% der Partikelpopulation einen maximalen Durchmesser von weniger als 10 µm aufweisen.

7. Verfahren oder Polymerpolyol gemäß einem der Ansprüche 1-5, wobei mindestens 90 Gew.-% der Partikelpopulation einen maximalen Durchmesser von weniger als 5 µm aufweisen.

8. Verfahren oder Polymerpolyol gemäß einem der Ansprüche 1-7, wobei die Impfpopulation einen maximalen Partikeldurchmesser von weniger als 5 µm aufweist.

9. Verfahren oder Polymerpolyol gemäß einem der Ansprüche 1-8, wobei der Co-Reaktant mindestens eines von einem primären oder sekundären Amin oder einem Alkanolamin beinhaltet.

10. Ein Polyurethanschaum, der das Reaktionsprodukt einer Reaktionsmischung beinhaltet, wobei die Reaktionsmischung Folgendes beinhaltet:
das Polymerpolyol gemäß einem der Ansprüche 1-9; und
mindestens ein Polyisocyanat.

## Revendications

1. Une méthode de production d'un polymère polyol, la méthode comprenant :
le fait de fournir au moins une première composition comprenant au moins un polyol, au moins une population de grains non réactifs aux isocyanates, et au moins un co-réactif, l'au moins une population de grains non réactifs aux isocyanates comprenant moins de 5 % en poids du poids total de la première composition, la population de grains ayant un diamètre de particule maximum inférieur à 10 µm, et le co-réactif ayant un poids équivalent allant jusqu'à 400 et au moins un hydrogène actif attaché à un atome d'azote ou d'oxygène ; et
le fait de combiner la première composition avec au moins un polyisocyanate en mélangeant afin de former au moins un élément parmi une polyurée, un polyuréthane, et une population de particules de polyuréthane-urée dispersée dans la première composition, où au moins 90 % en poids de la population de particules a un diamètre de particule inférieur à 100 µm.

2. Un polymère polyol comprenant un produit de réaction d'un système de réaction, le système de réaction comprenant :
au moins une première composition comprenant au moins un polyol, au moins une population de grains non réactifs aux isocyanates, et au moins un co-réactif, l'au moins une population de grains non réactifs aux isocyanates comprenant moins de 5 % en poids du poids total de la première composition, la population de grains ayant un diamètre de particules maximal inférieur à 10 µm, et le co-réactif ayant un poids équivalent allant jusqu'à 400 et au moins un hydrogène actif attaché à un atome d'hydrogène ou d'oxygène ; et
au moins un polyisocyanate, où le polymère polyol a une population de particules, au moins 90 % en poids de la population de particules ayant un diamètre de particule maximal inférieur à 100 µm.

3. La méthode de la revendication 1 ou le polymère polyol de la revendication 2, où l'au moins une population de grains non réactifs aux isocyanates comprend des particules d'au moins un élément parmi l'acrylonitrile, le polystyrène, le méthacrylonitrile, le méthyl méthacrylate, le styrène-acrylonitrile, le carbonate de calcium, ou le sulfate de baryum, le trihydrate d'aluminium, le dioxyde de titane, et la silice pyrogénée.

4. La méthode de la revendication 1 ou le polymère polyol de la revendication 2, où l'au moins une population de grains non réactifs aux isocyanates comprend des particules de styrène-acrylonitrile fabriquées à l'aide d'au moins un stabilisant préformé.

5. La méthode ou le polymère polyol de n'importe laquelle des revendications 1 à 4, où la composition de polymère polyol a une teneur en matière solide comprise entre 15 et 40 % du poids du polymère polyol.

6. La méthode ou le polymère polyol de n'importe laquelle des revendications 1 à 5, où au moins 90 % en poids de la population de particules ont un diamètre maximum inférieur à 10 µm.

7. La méthode ou le polymère polyol de n'importe laquelle des revendications 1 à 5, où au moins 90 % en poids de la population de particules ont un diamètre maximum inférieur à 5 µm.

8. La méthode ou le polymère polyol de n'importe laquelle des revendications 1 à 7, où la population de grains a un diamètre de particule maximum inférieur à 5 µm.

9. La méthode ou le polymère polyol de n'importe laquelle des revendications 1 à 8, où le co-réactif comprend au moins un élément parmi une amine primaire ou secondaire ou une alkanolamine.

10. Une mousse polyuréthane comprenant le produit de réaction d'un mélange de réaction, le mélange de réaction comprenant :
le polymère polyol de n'importe laquelle des revendications 1 à 9 ; et
au moins un polyisocyanate.
